# FASCICULE DE BREVET EUROPEEN

(11) **EP 1 212 882 B1**
(45) Date de publication et mention de la délivrance du brevet: **16.03.2005**
(21) Numéro de dépôt: 00962599.7
(22) Date de dépôt: 07.09.2000
(51) Int. Cl.: H04L 29/06

(54) **VALIDATION D'UNE OPERATION AU COURS D'UNE COMMUNICATION ENTRE DEUX TERMINAUX A TRAVERS UN RESEAU NUMERIQUE**
PRÜFUNG DER GÜLTIGKEIT DES BETRIEBS WÄHREND KOMMUNIKATION ZWISCHEN ZWEI ENDGERÄTEN EINES DIGITALEN NETZ
VALIDATING AN OPERATION DURING A COMMUNICATION BETWEEN TWO TERMINALS THROUGH A DIGITAL NETWORK

(30) Priorité: 13.09.1999 FR 9911495
(43) Date de publication de la demande: 12.06.2002
(73) Titulaire: FRANCE TELECOM, 75015 Paris (FR)
(72) Inventeur: DUMORTIER, Jean-Paul, F-14740 Putot en Bessin (FR); HANNECART, Eric, F-59700 Marq en Baroeul (FR)
(74) Mandataire: Cabinet Martinet & Lapoux
(86) Numéro de dépôt international: PCT/FR2000/002499
(87) Numéro de publication internationale: WO 2001/020871

(56) Documents cités:
- EP-A- 0 926 611
- WO-A-98/32254
- US-A- 5 729 594
- US-A- 5 903 721

## Description

L'invention concerne un procédé de validation d'une opération au cours d'une communication établie entre deux terminaux à travers un réseau numérique de télécommunication. Elle s'applique en particulier à la validation d'opérations de télépaiement par utilisation de données confidentielles, telles par exemple que des numéros de carte bancaire, des codes d'identification ou d'authentification, etc.

Lorsque le réseau numérique de télécommunication est un réseau numérique à intégration de services RNIS, les terminaux d'usager sont reliés à ce réseau par des lignes numériques bidirectionnelles qui transportent chacune des canaux numériques multiplexés comprenant au moins deux canaux logiques de données B et un canal logique de signalisation D. Les communications de dialogue entre terminaux empruntent les canaux de données B qui sont commutés en mode circuit, le canal D étant utilisé pour la signalisation usager-réseau et pouvant également transporter des données d'usager à faible débit en mode paquet.

Si l'on veut transmettre des données au cours d'une communication de conversation empruntant un canal de données B, il faut interrompre la conversation en cours entre les usagers, de sorte que la liaison est alors allouée par alternance soit à la conversation, soit au transport de données. Les données ainsi transportées ne sont pas protégées contre les tentatives d'interception et d'utilisation frauduleuse ou non autorisée.

Lorsque le réseau numérique de télécommunication utilisé est un réseau de radiotéléphonie cellulaire numérique, par exemple de type GSM, l'un des terminaux étant un radiotéléphone mobile, on rencontre également les inconvénients mentionnés ci-dessus lorsque des données doivent être échangées au cours d'une communication, celle-ci devant être interrompue pour le transport des données.

Les documents US-A-5729594, US-A-5903721 et EP-A-0926611 proposent une méthode pour établir une transaction commerciale en ligne. La présente demande diffère de ces documents notamment en ce que la validation comprend l'établissement de deux liaisons séparées permettant le transport des données liées à la conversation entre deux usagers et le transport des données confidentielles liées à la transaction entre les deux usagers, ces données confidentielles n'étant pas accessibles au deuxième usager.

L'invention a notamment pour but d'éviter ces inconvénients, en utilisant au mieux les fonctionnalités des réseaux numériques de télécommunication.

Elle propose à cet effet un procédé de validation d'une opération au cours d'une communication établie entre des premier et deuxième terminaux à travers un réseau numérique de télécommunication, ladite communication empruntant un canal logique d'une liaison numérique multiplex comportant un autre canal logique de transport de données, caractérisé en ce qu'il comprend :
- l'établissement au cours de ladite communication, d'une liaison entre le premier terminal et un troisième terminal, via ledit autre canal de la liaison numérique multiplex,
- le transfert de données confidentielles entre le premier terminal et le troisième terminal via ledit autre canal, les données confidentielles étant destinées à la validation de l'opération effectuée au cours de la communication entre les premier et deuxième terminaux et n'étant pas accessibles au deuxième terminal, et
- l'envoi par le troisième terminal au deuxième terminal d'un message d'acquittement confirmant la validation de ladite opération.

Les données confidentielles servant à la validation de ladite opération sont donc, selon l'invention, transmises sur un canal dédié, distinct du canal utilisé pour la communication entre les premier et deuxième terminaux, sans qu'il soit nécessaire d'interrompre cette communication et sans que l'on ait un accès aux données confidentielles à partir du deuxième terminal, puisque ces données sont transmises uniquement entre le premier et le troisième terminal et indépendamment du deuxième terminal.

Dans un mode de réalisation préféré de l'invention, le réseau numérique de télécommunication est un réseau numérique à intégration de services RNIS et l'établissement de la liaison entre les premier et le troisième terminaux comprend l'ouverture d'un circuit virtuel dans un canal de signalisation D.

Les usagers RNIS ont en effet la possibilité de bénéficier de services de Liaison Logique Permanente (LLP) pour le transfert bidirectionnel simultané de données structurées en trames sur des canaux D de leurs accès au réseau RNIS.

A défaut, si l'usager du premier terminal ne bénéficie pas des services LLP, la liaison entre les premier et troisième terminaux pour le transfert des données confidentielles peut emprunter un deuxième canal de données B de l'accès de cet usager au réseau RNIS.

Selon une autre caractéristique de l'invention, le procédé comprend également l'établissement d'une liaison entre les deuxième et troisième terminaux via le réseau, demandé par le deuxième terminal, préalablement à l'établissement de la liaison entre les premier et troisième terminaux, pour requérir une validation de ladite opération et ensuite pour l'envoi du message d'acquittement par le troisième terminal au deuxième terminal.

Avantageusement, la liaison entre les deuxième et troisième terminaux utilise le canal de signalisation D de la ligne d'accès du deuxième terminal au réseau RNIS.

En variante, la liaison entre les premier et le troisième terminaux est établie à l'initiative du premier terminal, pour validation de ladite opération, et la liaison du troisième terminal avec le deuxième terminal est alors établie après cette validation, pour l'envoi d'un message d'acquittement au deuxième terminal.

L'invention prévoit également qu'une autre liaison entre les premier et deuxième terminaux puisse être établie par ouverture d'un circuit virtuel dans le canal de signalisation D, après réception du message d'acquittement par le deuxième terminal, pour le transfert de données du deuxième terminal au premier terminal. Il s'agit alors par exemple d'un téléchargement de données du deuxième terminal dans le premier terminal, suite à une transaction.

Dans une variante de réalisation de l'invention, le réseau numérique de télécommunication comprend un réseau de radiotéléphonie numérique et l'établissement de la liaison entre les premier et troisième terminaux utilise un service de messages courts SMS (Short Message Service) disponible sur le réseau de radiotéléphonie.

L'invention concerne également l'agencement de terminaux comprenant des premier et deuxième terminaux pour valider une opération au cours d'une communication établie entre eux à travers un réseau numérique de télécommunication et empruntant un canal logique d'une liaison numérique multiplex comportant un autre canal logique de transport de données. Cet agencement est caractérisé en ce qu'il comprend un troisième terminal entre lequel et le premier terminal une liaison est établie au cours de ladite communication via ledit autre canal de la liaison numérique multiplex, entre lequel et le premier terminal des données confidentielles sont transférées via ledit autre canal, les données confidentielles étant destinées à la validation de l'opération effectuée au cours de la communication entre les premier et deuxième terminaux et n'étant pas accessibles au deuxième terminal, et par lequel un message d'acquittement. confirmant la validation de ladite opération est envoyée au deuxième terminal.

L'invention s'applique, de façon générale, au commerce électronique. Dans ce cas, le premier terminal est celui d'un usager, tel que client, et le deuxième terminal est celui d'un autre usager, tel que vendeur, de sorte que ladite opération validée au cours de la communication entre les premier et deuxième terminaux soit un télépaiement effectué par un usager du premier terminal au profit d'un usager du deuxième terminal et validé par les données confidentielles transférées entre les premier et troisième terminaux. Le troisième terminal est alors celui d'un établissement bancaire ou analogue, qui gère un compte de dépôt ouvert par l'usager du deuxième terminal.

L'invention s'applique également au cas où des communications entre terminaux ne peuvent être poursuivies qu'après identification ou authentification des usagers appelants, vérification de codes d'accès, etc., ces opérations d'identification, d'authentification, de vérification ou analogue étant effectuées de façon sécurisée par l'intermédiaire d'un tiers.

L'invention sera mieux comprise et d'autres caractéristiques, détails et avantages de celle-ci apparaîtront plus clairement au cours de la description qui suit, faite en référence aux dessins annexés, dans lesquels :
- la figure 1 est un bloc-diagramme schématique de plusieurs terminaux reliés par un réseau numérique mettant en oeuvre une réalisation préférée du procédé selon l'invention ; et
- la figure 2 est un organigramme des opérations essentielles du procédé selon l'invention.

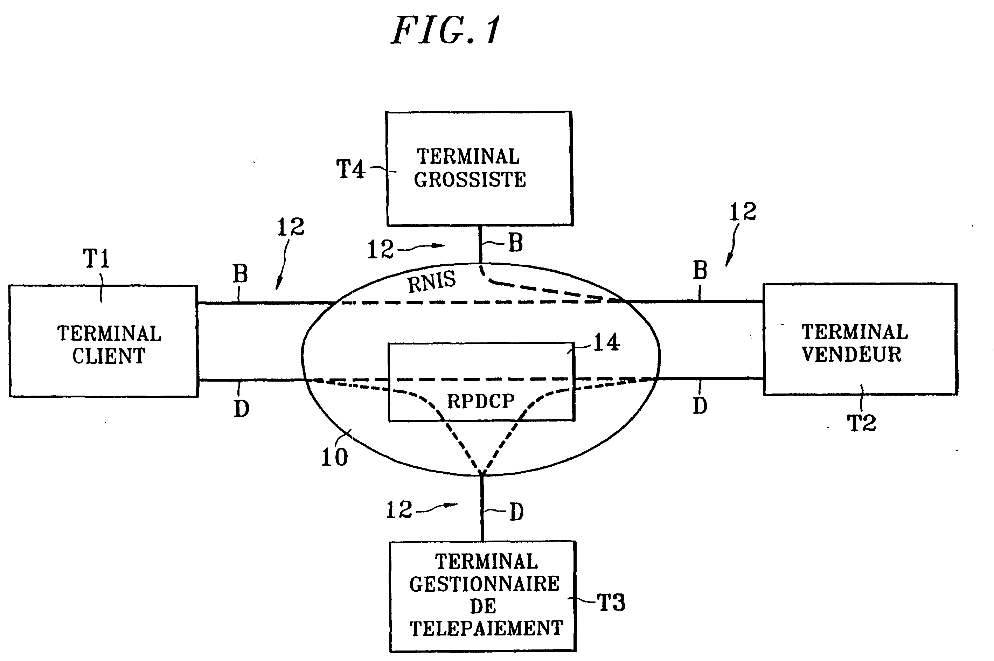

En figure 1, des terminaux numériques T1 et T2 sont reliés à des points d'accès d'un réseau numérique à intégration de services 10 par des lignes numériques bidirectionnelles 12 qui transportent des canaux numériques multiplexés comprenant au moins deux canaux de données B et un canal de signalisation D dans le cas d'un accès de base, ou bien 30 canaux de données B et un canal de signalisation D dans le cas d'un accès primaire.

En variante, les lignes numériques d'usager 12 sont supportées par la technique de transmission ADSL (Asymétrie Digital Subscriber Line).

Lorsque l'invention est appliquée au commerce électronique et au télépaiement, le premier terminal T1 est par exemple celui d'un client ou d'un acheteur, et le deuxième terminal T2 celui d'un vendeur.

La communication entre les terminaux T1 et T2 est essentiellement une conversation, au cours de laquelle une opération, telle qu'un achat, est confirmée par le client.

Cette communication emprunte, suivant chacun des deux sens de transmission, l'un des canaux de données B de la ligne numérique 12.

Si le vendeur a souscrit un abonnement à un service de Liaison Logique Permanente LLP, le terminal T2 peut, au cours de la communication avec le terminal T1 du client, demander l'établissement d'une liaison avec un troisième terminal T3 d'un gestionnaire de télépaiement, tel que par exemple la banque du vendeur, par ouverture d'un circuit virtuel dans le canal de signalisation D. A travers la liaison par canal D entre les terminaux T2 et T3, le vendeur transmet à sa banque les caractéristiques de l'achat effectué par le client et comprenant notamment l'identification du client, les références des objets achetés et le montant total de l'achat.

Si le client a lui aussi souscrit un abonnement au service LLP, le terminal T3 de la banque du vendeur demande l'établissement d'une liaison avec le terminal T1 par ouverture d'un circuit virtuel dans le canal de signalisation D. Une procédure de paiement utilisant des données confidentielles du client est alors mise en oeuvre, cette procédure s'appuyant par exemple sur les mécanismes définis par l'Association pour le Développement du TéléPaiement (ADTP) et qui comprennent les étapes fonctionnelles suivantes :
- identification de l'objet à payer et présentation de la référence et du montant de la facture,
- présentation de l'ordre de paiement et acceptation du client,
- procédure de paiement faisant intervenir la banque du client et la banque du vendeur,
- affichage d'un certificat de prise en compte de l'ordre de paiement,
- finalisation de la transaction de paiement.

Les données confidentielles transmises entre les terminaux T1 et T3 sont inaccessibles à partir du terminal T2 du vendeur, les canaux utilisés pour les liaisons entre les terminaux T1 et T2 et entre les terminaux T1 et T3 étant distincts, même s'ils sont multiplexés dans la même ligne téléphonique numérique d'usager desservant le terminal T1.

A la fin de la procédure de paiement, le terminal T3 valide le paiement par le client, en transmettant un message d'acquittement au terminal T2 à travers la liaison précédemment établie entre eux, puis rompt cette liaison en libérant le canal D correspondant, après avoir rompu la liaison par canal D avec le terminal T1.

Le vendeur ayant reçu confirmation du paiement, livre au client les objets ou articles qu'il a acheté. Lorsque ces articles ou objets sont sous forme de données numériques, le terminal de vendeur T2 ouvre un circuit virtuel par le canal de signalisation D pour transmettre ces données au terminal de client T1.

Les circuits virtuels qui sont ouverts dans les canaux de signalisation D empruntent un réseau public de données commutées en mode paquet RPDCP 14 entre les deux extrémités du réseau RNIS 10 reliées aux terminaux en communication.

Lorsque le vendeur, le gestionnaire de télépaiement et/ou le client ne bénéficient pas des services LLP, les liaisons entre leurs terminaux empruntent uniquement des canaux de données B.

Le vendeur a également la possibilité lorsque son terminal T2 est en communication avec le terminal T1 du client et avec le terminal T3 du gestionnaire de télépaiement, d'établir une liaison via un deuxième canal de données B avec un terminal T4 d'un grossiste, par exemple pour se réapprovisionner.

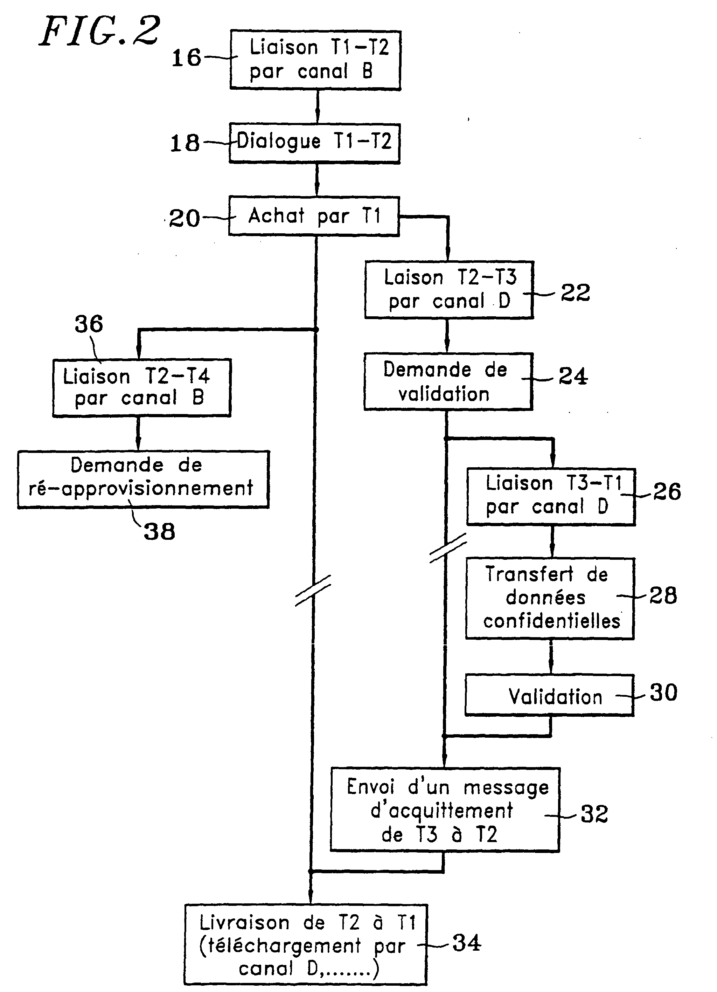

Les étapes essentielles de ce procédé sont représentées dans l'organigramme schématique de la figure 2.

La première étape 16 de ce procédé établit une liaison entre les terminaux T1 et T2, empruntant un canal de données B au départ du terminal T1.

L'étape suivante 18 est une conversation entre les usagers de ces deux terminaux, relatif à un achat 20 par l'usager du terminal T1. Pour finaliser cet achat, l'établissement d'une liaison avec le terminal T3 du gestionnaire de télépaiement est demandée par le terminal T2, en ouvrant un circuit virtuel dans un canal de signalisation D, comme indiqué en 22. Cette liaison étant établie, une demande de validation de l'achat 24 est envoyée du terminal T2 au terminal T3 et suivie de l'établissement d'une liaison entre ce dernier et le terminal T1 du client, comme indiqué en 26, par ouverture d'un circuit virtuel dans un canal de signalisation D lorsque l'usager du terminal T1 a souscrit au service LLP.

L'étape suivante 28 comprend le transfert de données confidentielles entre les terminaux T1 et T3, dans une mesure permettant une validation 30 de l'achat.

Cette validation étant acquise, le terminal T3 rompt la liaison par canal D entre celui-ci et le terminal T1, et un message d'acquittement est envoyé du terminal T3 au terminal T2 à l'étape suivante 32 du procédé, dans la liaison précédemment établie entre les terminaux T2 et T3, qui est ensuite rompue.

En réponse au message d'acquittement dans le terminal T2 confirmant le paiement de l'achat par l'usager du terminal T1, le vendeur au terminal T2 peut alors, comme indiqué en 34, livrer ou faire livrer les objets ou articles achetés à l'usager du terminal T1. Le cas échéant, cette livraison peut comprendre un téléchargement de données numériques depuis le terminal T2 dans le terminal T1, par ouverture d'un circuit virtuel dans un canal de signalisation D.

Au cours de la communication entre les terminaux T1 et T2 qui est maintenue jusqu'à la réception par le terminal T2 du message d'acquittement, l'usager du terminal T2 établit éventuellement une liaison avec le terminal T4 d'un grossiste, comme indiqué en 36, cette liaison empruntant un deuxième canal de données B d'accès du terminal T2 au réseau RNIS. A travers cette liaison, le vendeur au terminal T2 envoie au grossiste une demande de réapprovisionnement, comme indiqué en 38.

Dans une variante, le premier terminal T1 est un terminal radiotéléphonique mobile et l'invention est appliquée à la validation d'une opération dans une communication avec ledit terminal radiotéléphonique mobile à travers un réseau radiotéléphonique cellulaire numérique qui offre aux usagers un service de messages courts (SMS). Ces messages courts sont traités dans le réseau de radiotéléphonie comme de la signalisation et transmis par paquets indépendamment d'une communication avec le terminai radiotéléphonique. Les données confidentielles de validation de télépaiement sont alors par exemple enregistrées en mémoire non volatile EEPROM dans la carte d'identité d'usager SIM incluse de manière amovible dans le terminal radiotéléphonique.

Par ailleurs, certains terminaux radiotéléphoniques disposent simultanément d'une communication téléphonique classique et d'un service GPRS (Général Packet Radio Service) qui définit une architecture de réseau à commutation par paquets, le réseau GPRS pouvant être relié à des réseaux fixes de données selon la recommandation X.25, et donc à un réseau RNIS.

## Revendications

1. Procédé de validation d'une opération au cours d'une communication établie entre des premier et deuxième terminaux (T1, T2) à travers un réseau numérique de télécommunication (10), ladite communication empruntant un canal logique d'une liaison numérique multiplex comportant un autre canal logique de transport de données, **caractérisé en ce qu'**il comprend :
- l'établissement (26) au cours de ladite communication, d'une liaison entre le premier terminal (T1) et un troisième terminal (T3), via ledit autre canal de la liaison numérique multiplex,
- le transfert de données confidentielles (28) entre le premier terminal (T1) et le troisième terminal (T3) via ledit autre canal, les données confidentielles étant destinées à la validation de l'opération effectuée au cours de la communication entre les premier et deuxième terminaux (T1, T2) et n'étant pas accessibles au deuxième terminal (T2), et
- l'envoi (32) par le troisième terminal (T3) au deuxième terminal (T2) d'un message d'acquittement confirmant la validation de ladite opération.

2. Procédé conforme à la revendication 1, **caractérisé en ce que** le réseau numérique de télécommunication est un réseau RNIS (10) et l'établissement de la liaison entre les premier et troisième terminaux (T1, T3) comprend l'ouverture d'un circuit virtuel dans un canal de signalisation (D).

3. Procédé conforme à la revendication 1, **caractérisé en ce que** le réseau numérique de télécommunication est un réseau RNIS et la liaison entre les premier et troisième terminaux (T1, T3) emprunte un canal de données (B).

4. Procédé conforme à l'une quelconque des revendications 1 à 3, **caractérisé en ce qu'**il comprend également l'établissement (22) d'une liaison entre les deuxième et troisième terminaux (T2, T3) via le réseau (10), demandé par le deuxième terminal (T2) préalablement à l'établissement (26) de la liaison entre les premier et troisième terminaux (T1, T3), pour requérir une validation (30) de ladite opération et ensuite pour l'envoi (32) du message d'acquittement par le troisième terminal (T3) au deuxième terminal (T2).

5. Procédé conforme à la revendication 4, **caractérisé en ce que** l'établissement (22) de la liaison entre les deuxième et troisième terminaux (T2, T3) comprend l'ouverture d'un circuit virtuel dans le canal de signalisation (D).

6. Procédé conforme à la revendication 4 ou 5, **caractérisé en ce que** la liaison entre les deuxième et troisième terminaux (T2, T3) et la communication entre les premier et deuxième terminaux (T1, T2) sont multiplexées dans un même support physique desservant le deuxième terminal (T2) depuis le réseau (10).

7. Procédé conforme à l'une quelconque des revendications 2 à 6, **caractérisé en ce qu'**il comprend également, après réception du message d'acquittement par le deuxième terminal (T2), l'établissement (34) d'une autre liaison entre les deuxième et premier terminaux (T2, T1) par ouverture d'un circuit virtuel dans un canal de signalisation (D).

8. Procédé conforme à l'une quelconque des revendications 1 à 7, **caractérisé en ce que** le réseau numérique de télécommunication comprend un réseau de radiotéléphonie numérique et l'établissement de ladite liaison entre les premier et troisième terminaux (T1, T3) utilise un service de messages courts disponible dans le réseau de radiotéléphonie.

9. Agencement de terminaux comprenant des premier et deuxième terminaux (T1, T2) pour valider une opération au cours d'une communication établie entre eux à travers un réseau numérique de télécommunication (10) et empruntant un canal logique d'une liaison numérique multiplex comportant un autre canal logique de transport de données, **caractérisé en ce qu'**il comprend un troisième terminal (T3) entre lequel et le premier terminal (T1) une liaison est établie au cours de ladite communication via ledit autre canal de la liaison numérique multiplex, entre lequel et le premier terminal (T1) des données confidentielles sont transférées via ledit autre canal, les données confidentielles étant destinées à la validation de l'opération effectuée au cours de la communication entre les premier et deuxième terminaux (T1, T2) et n'étant pas accessibles au deuxième terminal (T2), et par lequel un message d'acquittement confirmant la validation de ladite opération est envoyé au deuxième terminal (T2).

10. Agencement de terminaux conforme à la revendication 9, **caractérisé en ce que** le premier terminal (T1) est celui d'un usager, tel que client, et le deuxième terminal (T2) est celui d'un autre usager, tel que vendeur, de sorte que ladite opération validée au cours de la communication entre les premier et deuxième terminaux (T1, T2) soit un télépaiement effectué par l'usager du premier terminal (T1) au profit de l'usager du deuxième terminal (T2) et validé par les données confidentielles transférées entre les premier et troisième terminaux (T1, T3).

11. Agencement conforme à la revendication 10, **caractérisé en ce que** le troisième terminal (T3) est celui d'un établissement bancaire ou analogue qui gère un compte de dépôt ouvert par l'usager du deuxième terminal (T2).

## Patentansprüche

1. Verfahren zur Validierung einer Transaktion während einer Kommunikation zwischen einem ersten und einem zweiten Terminal (T1, T2) über ein digitales Telekommunikationsnetz (10), wobei für die genannte Kommunikation ein logischer Kanal einer digitalen Multiplex-Verbindung mit einem weiteren logischen Kanal zur Datenübertragung verwendet wird, **dadurch gekennzeichnet, dass** es Folgendes umfasst:
- die Herstellung (26) einer Verbindung zwischen dem ersten Terminal (T1) und einem dritten Terminal (T3) über den genannten weiteren Kanal der digitalen Multiplex-Verbindung während der genannten Kommunikation,
- die Übertragung von vertraulichen Daten (28) zwischen dem ersten Terminal (T1) und dem dritten Terminal (T3) über den genannten weiteren Kanal, wobei die vertraulichen Daten zur Validierung der während der Kommunikation zwischen dem ersten und dem zweiten Terminal (T1, T2) durchgeführten Transaktion bestimmt sind und am zweiten Terminal (T2) nicht zugänglich sind, und
- das Versenden (32) einer Bestätigungsmeldung vom dritten Terminal (T3) an das zweite Terminal (T2), die die Validierung der genannten Transaktion bestätigt.

2. Verfahren nach Anspruch 1, **dadurch gekennzeichnet, dass** das digitale Telekommunikationsnetz ein ISDN-Netz (10) ist und die Herstellung der Verbindung zwischen dem ersten und dem dritten Terminal (T1, T3) die Eröffnung einer virtuellen Schaltung in einem Signalisierungskanal (D) umfasst.

3. Verfahren nach Anspruch 1, **dadurch gekennzeichnet, dass** das digitale Telekommunikationsnetz ein ISDN-Netz ist und für die Verbindung zwischen dem ersten und dem dritten Terminal (T1, T3) ein Datenkanal (B) verwendet wird.

4. Verfahren nach einem der Ansprüche 1 bis 3, **dadurch gekennzeichnet, dass** es außerdem die Herstellung (22) einer Verbindung zwischen dem zweiten und dem dritten Terminal (T2, T3) über das Netz (10) umfasst, die vom zweiten Terminal (T2) vor der Herstellung (26) der Verbindung zwischen dem ersten und dem dritten Terminal (T1, T2) angefordert wurde, um eine Validierung (30) der genannten Transaktion zu erhalten, und zum anschließenden Versenden (32) der Bestätigungsmeldung vom dritten Terminal (T3) an das zweite Terminal (T2).

5. Verfahren nach Anspruch 4, **dadurch gekennzeichnet, dass** die Herstellung (22) der Verbindung zwischen dem zweiten und dem dritten Terminal (T2, T3) die Eröffnung einer virtuellen Schaltung im Signalisierungskanal (D) umfasst.

6. Verfahren nach Anspruch 4 oder 5, **dadurch gekennzeichnet, dass** die Verbindung zwischen dem zweiten und dem dritten Terminal (T2, T3) und die Kommunikation zwischen dem ersten und dem zweiten Terminal (T1, T2) in dem gleichen physischen Träger gebündelt sind, der auch das zweite Terminal (T2) vom Netz (10) aus versorgt.

7. Verfahren nach einem der Ansprüche 2 bis 6, **dadurch gekennzeichnet, dass** es außerdem nach dem Empfang der Bestätigungsmeldung vom zweiten Terminal (T2) die Herstellung (34) einer weiteren Verbindung zwischen dem zweiten und dem ersten Terminal (T2, T1) durch Eröffnung einer virtuellen Schaltung in einem Signalisierungskanal (D) umfasst.

8. Verfahren nach einem der Ansprüche 1 bis 7, **dadurch gekennzeichnet, dass** das digitale Telekommunikationsnetz ein digitales Mobilfunknetz umfasst und dass zum Aufbau der genannten Verbindung zwischen dem ersten und dem dritten Terminal (T1, T3) ein in dem Mobilfunknetz verfügbarer Short Message Service genutzt wird.

9. Terminalanordnung, welche ein erstes und ein zweites Terminal (T1, T2) zur Validierung einer Transaktion während einer Kommunikation zwischen ihnen über ein digitales Telekommunikationsnetz (10) umfasst und einen logischen Kanal einer digitalen Multiplex-Verbindung mit einem weiteren logischen Kanal zur Datenübertragung nutzt, **dadurch gekennzeichnet, dass** sie ein drittes Terminal (T3) aufweist, zwischen welchem und dem ersten Terminal (T1) während der genannten Kommunikation über den genannten weiteren Kanal der digitalen Multiplex-Verbindung eine Verbindung hergestellt wird, zwischen welchem und dem ersten Terminal (T1) über den genannten weiteren Kanal vertrauliche Daten übertragen werden, wobei die vertraulichen Daten zur Validierung der während der Kommunikation zwischen dem ersten und dem zweiten Terminal (T1, T2) durchgeführten Transaktion bestimmt sind und am zweiten Terminal (T2) nicht zugänglich sind, und über welchen eine Bestätigungsmeldung zur Bestätigung der Validierung der genannten Transaktion an das zweite Terminal (T2) gesendet wird.

10. Terminalanordnung nach Anspruch 9, **dadurch gekennzeichnet, dass** das erste Terminal (T1) das eines Nutzers, z. B. eines Kunden, ist und das zweite Terminal (T2) das eines weiteren Nutzers, z. B. eines Verkäufers, ist, so dass die genannte, während der Kommunikation zwischen dem ersten und dem zweiten Terminal (T1, T2) validierte Transaktion ein vom Nutzer des ersten Terminals (T1) zugunsten des Nutzers des zweiten Terminals (T2) in Auftrag gegebener elektronischer Zahlungsauftrag ist und durch die vertraulichen Daten, die zwischen dem ersten und dem dritten Terminal (T1, T3) übertragen werden, validiert wird.

11. Terminalanordnung nach Anspruch 10, **dadurch gekennzeichnet, dass** das dritte Terminal (T3) das eines Finanzinstituts oder einer ähnlichen Einrichtung ist, die ein Guthabenkonto des Nutzers des zweiten Terminals (T2) führt.

## Claims

1. A method of validating an operation during a call set up between first and second terminals (T1, T2) via a digital telecommunication network (10), said call using a logical channel of a digital multiplex link including another logical channel to carry data, **characterized in that** it comprises:
- during said call, setting up (26) a link between the first terminal (T1) and a third terminal (T3) via said other logical channel of the digital multiplex link,
- transferring (28) confidential data between the first terminal (T1) and the third terminal (T3) via said other logical channel, the confidential data being intended for validating the operation effected during the call between the first and second terminals (T1, T2), and being not accessible to the second terminal (T2), and
- sending (32) an acknowledgement message confirming the validation of said operation from the third terminal (T3) to the second terminal (T2).

2. A method according to claim 1, **characterized in that** the digital telecommunication network is an ISDN network (10) and setting up the link between the first and second terminals (T1, T3) includes opening a virtual circuit on a signalling channel (D).

3. A method according to claim 1, **characterized in that** the digital telecommunication network is an ISDN network and the link between the first and third terminals (T1, T3) uses a data channel (B).

4. A method according to any one of claims 1 to 3, **characterized in that** it further comprises setting up (22) a link between the second and third terminals (T2, T3) via the network (10) at the request of the second terminal (T2) prior to setting up (26) the link between the first and third terminals (T1, T3), to request validation (30) of said operation and then the sending (32) of the acknowledgement message from the third terminal (T3) to the second terminal (T2).

5. A method according to claim 4, **characterized in that** the setting up (22) of the link between the second and third terminals (T2, T3) includes opening a virtual circuit on the signalling channel (D).

6. A method according to claim 4 or 5, **characterized in that** the link between the second and third terminals (T2, T3) and the call between the first and second terminals (T1, T2) are multiplexed on the same physical medium serving the second terminal (T2) from the network (10).

7. A method according to any one of claims 2 to 6, **characterized in that** it further comprises, after the second terminal (T2) has received the acknowledgement message, setting up (34) another link between the second and first terminals (T2, T1) by opening a virtual circuit on a signaling channel (D).

8. A method according to any one of claims 1 to 7, **characterized in that** the digital telecommunication network comprises a digital radio telephone network and setting up said link between the first and third terminals (T1, T3) uses a short message service available on the mobile radio telephone network.

9. An arrangement of terminals including first and second terminals (T1, T2) for validating an operation during a call set up between them via a digital telecommunication network (10) and using a logical channel of a multiplex digital link including another logical channel to carry data, **characterized in that** it comprises a third terminal (T3) between which and the first terminal (T1) a link is set up during said call via said other channel of the multiplex digital link, between which and the first terminal (T1) confidential data is exchanged via said other channel, confidential data being intended being intended for validating the operation effected during the call between the first and second terminals (T1, T2) and being not accessible to the second terminal (T2), and from which an acknowledgement message confirming validation of said operation is sent to the second terminal (T2).

10. An arrangement of terminals according to claim 9, **characterized in that** the first terminal (T1) is that of a user, such as a customer, and the second terminal (T2) is that of another user, such as a vendor, so that said operation validated during the call between the first and second terminals (T1, T2) is a telepayment effected by the user of the first terminal (T1) to the benefit of the user of the second terminal (T2) and validated by the confidential data transferred between the first and third terminals (T1, T3).

11. An arrangement according to claim 10, **characterized in that** the third terminal (T3) is that of a bank or the like which manages an account opened by the user of the second terminal (T2).
